# EUROPEAN PATENT SPECIFICATION

(11) **EP 1 176 041 B1**
(45) Date of publication and mention of the grant of the patent: **17.11.2004**
(21) Application number: 01306272.4
(22) Date of filing: 20.07.2001
(51) Int. Cl.: B60J 5/04

(54) **Vehicle door inner panel with integrated mount for window regulator drive means**
Trägerplatte für eine Kraftfahrzeugtür mit integrierter Fassung für einen Fensterheberantrieb
Support d'équipements pour une porte de véhicule avec un support intégré pour un entraînement de lève-vitre

(30) Priority: 25.07.2000 GB 0018103
(43) Date of publication of application: 30.01.2002
(73) Proprietor: ArvinMeritor Light Vehicle Systems-France, 45600 Sully sur Loire (FR)
(72) Inventor: Lawrie, Mark Graham, 45600 Lion en Sulias (FR); Le Gallo, Yann, 4510 Orleans (FR); De Vries, Pascal, 45640 Sandillion (FR); Blume, Klaus B. Wilhelm, 64569 Nauheim (DE); Laurandel, Herve, 14200 Herouville, St Claire (FR); Dobson, Simon Blair, Folkestone, Kent CT20 3TA (GB); Cabanne, Damien, 77 Fontainebleau (FR); Hopson, Charles Berry, Lebanon, Tennessee 37087 (US)
(74) Representative: Jones, John Bryn

(56) References cited:
- EP-A- 1 090 788
- DE-A- 19 755 899
- DE-A- 19 914 598
- US-A- 4 306 378
- US-A- 5 581 952
- PATENT ABSTRACTS OF JAPAN vol. 1997, no. 06, 30 June 1997 (1997-06-30) & JP 09 032412 A (OI SEISAKUSHO CO LTD), 4 February 1997 (1997-02-04)
- PATENT ABSTRACTS OF JAPAN vol. 1999, no. 04, 30 April 1999 (1999-04-30) & JP 11 002069 A (SHIROKI CORP), 6 January 1999 (1999-01-06)

## Description

The present invention relates to door inner panel assemblies and in particular door inner panel assemblies for use in automobiles.

Known door inner panel assemblies include a door inner panel and a window regulator drive means such as a window regulator drive motor or a manual drive means. The drive means operate to raise and lower an associated window glass.

However, known door inner panel assemblies include several components which are complicated and time consuming to assemble.

US5581952 shows a gear and quadrant type window regulator. A separate window actuator mounting bracket is provided for mounting on a vehicle inner door panel, said window actuator mounting bracket having an abutment portion and a shaft support portion.

DE19914598 also shows a gear and quadrant type window regulator.

JP09155150 shows a wire type cable window regulator wherein a separate drum housing is provided.

DE19755899 also shows a wire type cable window regulator, wherein a separate plastics drum housing is provided.

EP1090788 (state of the art according to Art. 54(3) EPC) shows a wire type window regulator with a plastics cable drum housing.

An object of the present invention is to provide an improved form of door inner panel assembly.

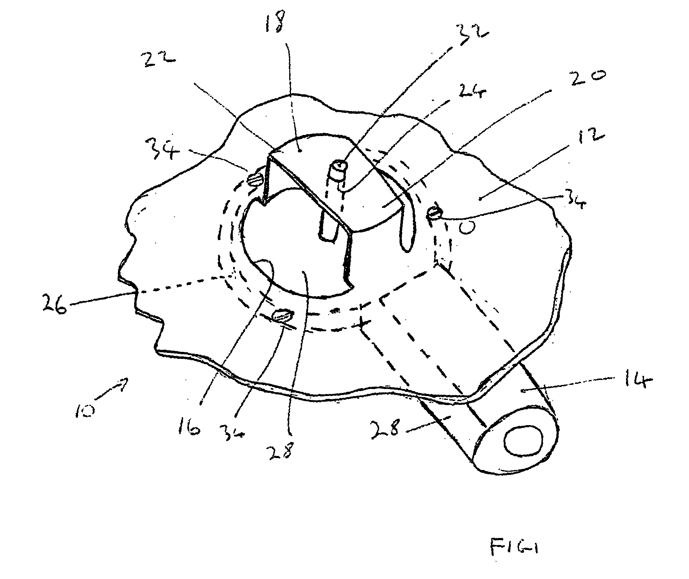

The present invention will now be described, by way of example only, with reference to the accompanying drawings in which:-
Figure 1 is an isometric view of part of a door inner panel assembly according to the present invention;
Figure 2 is a sectional view of part of figure 1; and

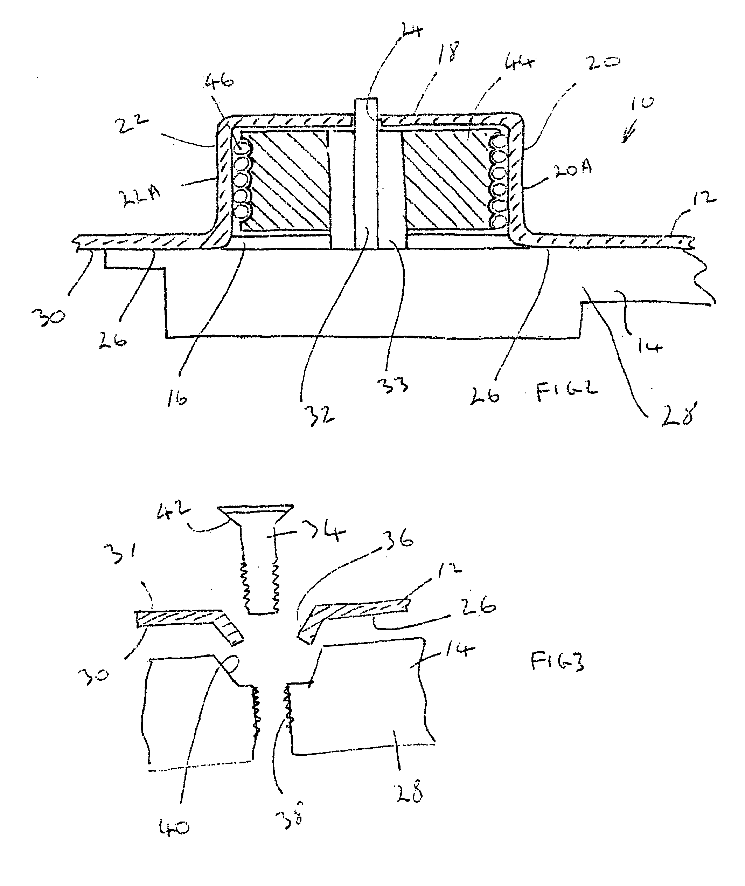

Figure 3 is a sectional view of part of figure 1.

With reference to the figures there is shown a door inner panel assembly 10 including a door inner panel 12 and a window regulator drive means, in the form of a window regulator motor 14.

In this case door inner panel 12 is in the form of a module mounting plate (also known as a carrier plate) upon which is mounted the window regulator motor, door latches (not shown) and a loud speaker (not shown). The door inner panel 12 is secured in a relatively large aperture of the inside of an associated door.

However, in further embodiments, the door inner panel of the present invention can comprise the door inner skin which is connected to the door outer skin, with various components such as latches and loud speakers being independently attached thereto.

The door inner panel is made from sheet material, in this case sheet steel and includes an aperture 16 and a bridge portion 18 integrally formed therewith via a pressing or stamping process. Bridge portion 18 includes a first upstanding leg 20 of L shape and a second upstanding leg 22 also of L shape.

Situated between the adjacent portions of the first and second upstanding legs is a shaft support portion in the form of a hole 24.

Adjacent aperture 16 is an abutment portion 26 of the door inner panel, against which the window regulator motor is secured.

The window regulator motor 14 includes a drive portion in the form of a body 28 which is situated on a first side 30 of the door inner panel.

An output shaft 32 projects from the body 28 through aperture 16 and also through hole 24. Output shaft 32 is rotationally fast with body 28 and acts a fixed axle for driven hub 33.

However, in further embodiments the output shaft itself could be rotationally driven by the window regulator motor.

The window regulator motor is secured to the door inner panel by three screws 34 which past from the second side 31 through fixing holes 36 into the threaded holes 38 of the window regulator body.

In this case holes 36 are conically formed and co-operating with a conical recess 40 of the threaded holes 38 and also co-operates with the conical head 42 of the screws 34.

The conical form of fixing holes 36 acts in co-operation with the conical recesses 40 to locate the body 28 in the correct position relative to the door inner panel 12. Subsequent insertion of the screws 34 ensures that the body is secured to the body inner panel against the abutment portion 26.

It should be noted that hole 24 supports a portion of shaft 32 remote from body 28. Furthermore the first and second upstanding legs are provided substantially diametrically opposite to each other with regard to the axis of the shaft 32.

A window regulator drum 44 (only shown on figure 2 for clarity) is secured rotationally fast to the driven hub 33. A window regulator cable 46 is wrapped around the periphery of the drum such that operation of the window regulator motor causes the driven hub and hence drum to rotate which results in lifting or lowering of a cursor attached to the cables, the cursor carrying a window glass.

In particular the aperture 16 is large enough to allow the drum to pass through the aperture during assembly of the window regulator motor and drum on to the door inner panel.

It can be seen that the shaft support portion assists in supporting the shaft 32 when it is being driven by the window regulator motor 14. Furthermore side portions 20A and 22A of first and second upstanding legs 20 and 22 are positioned relatively closed to the periphery of the drum such that turns of the cable around the drum are retained in their correct drum groove.

In further embodiments the drive means could comprise a manual drive means instead of a window regulator motor.

In particular the door inner panel can be made from sheet material which is preferably sheet steel though in further embodiments this need not be the case. A particularly cost effective method of producing a door inner panel is to press or stamp the bridge portion 18, though in further embodiments this need not be the case.

In order to ensure that the drive means is secured to the door inner panel in the correct position such that the shaft 32 aligns with the hole 24, location features such a conical fixing holes 36 can be provided in the panel. When manufacturing these holes it is advantageous to provide a stamping tool which locates off the hole 24 whilst a finishing coining process is applied to the conical fixing holes 36. Alternatively where the conical fixing holes 36 are finished prior to hole 24, it is preferable to locate the tool which finishes hole 24 off the conical fixing holes 36.

In a further method, it is possible to finish both the conical fixing holes 36 and the hole 24 in a single process, thus ensuring that the tolerances on the positions of these holes is minimised.

## Claims

1. A door inner panel assembly (10) including a door inner panel (12) formed from a sheet material and a window regulator drive means, the window regulator drive means having a drive portion and an output shaft (32) projecting from the drive portion, the inner panel having an abutment portion (26) for co-operation with the drive portion and a shaft support portion for co-operation with a portion of the shaft remote from the drive portion to support the shaft, the abutment portion and shaft support portion being integrally formed from the same sheet material and further including a window regulator drum (44) secured on the shaft and positioned between the drive portion and the shaft support portion.

2. A door inner panel assembly as defined in Claim 1 in which the drive means is in the form of a window regulator motor (14).

3. A door inner panel assembly as defined in Claim 1 in which the drive means is in the form of a manual drive means.

4. A door inner panel assembly as defined in any preceding claim in which the drive portion is mounted on a first side of the door inner panel and the panel includes an aperture (16) substantially in a plane of the abutment portion through which the shaft can pass.

5. A door inner panel assembly as defined in Claim 4 in which the window regulator cable drum (44) can pass through the aperture.

6. A door inner panel assembly as defined in any preceding claim in which the shaft support portion is secured relative to the abutment portion by at least a first upstanding leg (20).

7. A door inner panel assembly as defined in Claim 6 in which the shaft support portion is further secured relative to the abutment portion by a second upstanding leg (22) positioned substantially opposite the first upstanding leg.

8. A door inner panel assembly as defined in Claim 6 or 7 in which portions (20A, 22A) of the first and/or second legs act as cable guides for the cable drum.

9. A door inner panel assembly as defined in any preceding claim in which the sheet material is a sheet metal such as sheet steel.

10. A door inner panel assembly as defined in Claim 9 in which the door inner panel (12) is pressed or stamped to provide regions for the shaft upper portion.

11. A door inner panel assembly as defined in any preceding claim in which the shaft support portion defines a hole for receiving the portion of the shaft remote from the drive portion, the hole having a diameter smaller than a diameter of the window regulator cable drum.

12. A method of providing a door inner panel assembly (10) including a door inner panel (12) formed from a sheet material and a window regulator drive means comprising the steps of providing a window regulator drive means having a drive portion and an output shaft (32) projecting from the drive portion, providing an inner panel having an abutment portion for co-operation with the drive portion and a shaft support portion for co-operation with a portion of the shaft remote from the drive portion to support the shaft, providing a window regulator cable drum (44), positioning the window regulator drive means relative to the door inner panel via at least one location feature (36) of the panel, and securing the window regulator drive means relative to the door inner panel, in which the abutment portion and shaft support portion are integrally formed from the same sheet material in which the window regulator drum is secured on the shaft and positioned between the drive portion and the shaft support portion.

13. A method as defined in Claim 12 including the step of providing a finishing tool and locating the finishing tool off one of the at least one location feature or shaft support portion and providing a finishing operation on the other of the at least one location feature or shaft support portion.

14. The method of Claim 12 including the step of providing a finishing tool which provides a finishing operation on the shaft support portion and the at least one location feature.

15. The method of Claims 12 to 14 in which the at least one location feature also acts as a fixing feature to secure the door inner panel to the window regulator drive means.

## Patentansprüche

1. Türinnenplattenbaugruppe (10) mit einer Türinnenplatte (12) aus einem plattenförmigen Material und einer Fensterheberantriebseinrichtung, wobei die Fensterheberantriebseinrichtung einen Antriebsteil und eine von dem Antriebsteil vorstehende Abtriebswelle (32) aufweist, wobei die Innenplatte einen Widerlagerteil (26), der mit dem Antriebsteil zusammenwirkt, und einen Wellenlagerteil aufweist, der zur Lagerung der Welle mit einem vom Antriebsteil entfernt liegenden Teil der Welle zusammenwirkt, wobei der Widerlagerteil und der Wellenlagerteil einstückig aus demselben plattenförmigen Material gebildet sind und ferner eine Fensterhebertrommel (44) umfassen, die an der Welle befestigt und zwischen dem Antriebsteil und dem Wellenlagerteil angeordnet ist.

2. Türinnenplattenbaugruppe nach Anspruch 1, bei der die Antriebseinrichtung als Fensterhebermotor (14) ausgebildet ist.

3. Türinnenplattenbaugruppe nach Anspruch 1, bei der die Antriebseinrichtung als manuelle Antriebseinrichtung ausgebildet ist.

4. Türinnenplattenbaugruppe nach einem vorhergehenden Anspruch, bei der der Antriebsteil auf einer ersten Seite der Türinnenplatte angebracht ist und die Platte eine Öffnung (16) aufweist, die sich im wesentlichen in einer Ebene des Widerlagerteils befindet und durch die die Welle verlaufen kann.

5. Türinnenplattenbaugruppe nach Anspruch 4, bei der die Fensterheberseiltrommel (44) die Öffnung durchqueren kann.

6. Türinnenplattenbaugruppe nach einem vorhergehenden Anspruch, bei der der Wellenlagerteil in bezug auf den Widerlagerteil durch wenigstens einen ersten hochstehenden Schenkel (20) befestigt ist.

7. Türinnenplattenbaugruppe nach Anspruch 6, bei der der Wellenlagerteil in bezug auf den Widerlagerteil ferner durch einen zweiten hochstehenden Schenkel (22) befestigt ist, der im wesentlichen dem ersten hochstehenden Schenkel gegenüber angeordnet ist.

8. Türinnenplattenbaugruppe nach Anspruch 6 oder 7, bei der Teile (20A, 22A) des ersten und/oder des zweiten Schenkels als Seilführungen für die Seiltrommel wirken.

9. Türinnenplattenbaugruppe nach einem vorhergehenden Anspruch, bei der das plattenförmige Material ein Blech wie etwa Stahlblech ist.

10. Türinnenplattenbaugruppe nach Anspruch 9, bei der die Türinnenplatte (12) zur Bereitstellung von Bereichen für den oberen Teil der Welle gepreßt oder gestanzt ist.

11. Türinnenplattenbaugruppe nach einem vorhergehenden Anspruch, bei der der Wellenlagerteil ein Loch begrenzt, in dem der vom Antriebsteil entfernt liegende Teil der Welle aufgenommen ist, wobei der Durchmesser des Loches kleiner als ein Durchmesser der Fensterheberseiltrommel ist.

12. Verfahren zur Bereitstellung einer Türinnenplattenbaugruppe (10) mit einer Türinnenplatte (12) aus einem plattenförmigen Material und einer Fensterheberantriebseinrichtung, das die folgenden Schritte umfaßt: eine Fensterheberantriebseinrichtung mit einem Antriebsteil und einer von dem Antriebsteil vorstehenden Abtriebswelle (32) wird bereitgestellt, eine Innenplatte mit einem Widerlagerteil, der mit dem Antriebsteil zusammenwirkt, und einem Wellenlagerteil wird bereitgestellt, der zur Lagerung der Welle mit einem vom Antriebsteil entfernt liegenden Teil der Welle zusammenwirkt, eine Fensterheberseiltrommel (44) wird bereitgestellt, die Fensterheberantriebseinrichtung wird bezüglich der Türinnenplatte über wenigstens ein Fixierungsmerkmal (36) der Platte angeordnet, und die Fensterheberantriebseinrichtung wird in bezug auf die Türinnenplatte befestigt, wobei der Widerlagerteil und der Wellenlagerteil einstückig aus demselben plattenförmigen Material gebildet werden und die Fensterhebertrommel an der Welle befestigt und zwischen dem Antriebsteil und dem Wellenlagerteil angeordnet wird.

13. Verfahren nach Anspruch 12, das den Schritt umfaßt, bei dem ein Endbearbeitungswerkzeug bereitgestellt wird und das Endbearbeitungswerkzeug von einem des wenigstens einen Fixierungsmerkmals oder dem Wellenlagerteil entfernt fixiert wird und an dem anderen des wenigstens einen Fixierungsmerkmals oder dem Wellenlagerteil eine Endbearbeitung vorgenommen wird.

14. Verfahren nach Anspruch 12, das den Schritt umfaßt, bei dem ein Endbearbeitungswerkzeug bereitgestellt wird, mit dem an dem Wellenlagerteil und dem wenigstens einen Fixierungsmerkmal eine Endbearbeitung vorgenommen wird.

15. Verfahren nach den Ansprüchen 12 bis 14, bei dem das wenigstens eine Fixierungsmerkmal auch als Montagemerkmal wirkt, um die Türinnenplatte an der Fensterheberantriebseinrichtung zu befestigen.

## Revendications

1. Ensemble (10) de panneau intérieur de porte comprenant un panneau intérieur de porte formé dans un matériau en feuille et des moyens d'entraînement de lève-vitre, les moyens d'entraînement de lève-vitre possédant une partie d'entraînement et un arbre de sortie (32) qui fait saillie à partir de la partie d'entraînement, le panneau intérieur possédant une partie de butée (26) pour coopérer avec la partie d'entraînement et une partie de support d'arbre pour coopérer avec une partie de l'arbre éloignée de la partie d'entraînement afin de supporter l'arbre, la partie de butée et la partie de support d'arbre étant formées monobloc dans le même matériau en feuille et comprenant de plus un tambour (44) de lève-vitre fixé sur l'arbre et positionné entre la partie d'entraînement et la partie de support d'arbre.

2. Ensemble de panneau intérieur de porte selon la revendication 1, dans lequel les moyens d'entraînement se présentent sous la forme d'un moteur de lève-vitre (14).

3. Ensemble de panneau intérieur de porte selon la revendication 1, dans lequel les moyens d'entraînement se présentent sous la forme de moyens d'entraînement manuels.

4. Ensemble de panneau intérieur de porte selon l'une quelconque des revendications précédentes, dans lequel la partie d'entraînement est montée sur une première face du panneau intérieur de porte et le panneau comprend une ouverture (16) située sensiblement dans un plan de la partie de butée à travers laquelle l'arbre peut passer.

5. Ensemble de panneau intérieur de porte selon la revendication 4, dans lequel le tambour (44) de câble de lève-vitre peut passer à travers l'ouverture.

6. Ensemble de panneau intérieur de porte selon l'une quelconque des revendications précédentes, dans lequel la partie de support d'arbre est fixée par rapport à la partie de butée par au moins une première jambe (20) droite en saillie.

7. Ensemble de panneau intérieur de porte selon la revendication 6, dans lequel la partie de support d'arbre est fixée de plus par rapport à la partie de butée par une seconde jambe (22) droite en saillie et positionnée de manière sensiblement opposée à la première jambe droite en saillie.

8. Ensemble de panneau intérieur de porte selon l'une quelconque des revendications 6 ou 7, dans lequel des parties (20A, 22A) de la première et / ou de la seconde jambes agissent comme des guides de câble du tambour de câble.

9. Ensemble de panneau intérieur de porte selon l'une quelconque des revendications précédentes, dans lequel le matériau en feuille est de la tôle telle que de la tôle d'acier.

10. Ensemble de panneau intérieur de porte selon la revendication 9, dans lequel le panneau intérieur de porte (12) est pressé ou embouti afin de constituer des régions de la partie supérieure de l'arbre.

11. Ensemble de panneau intérieur de porte selon l'une quelconque des revendications précédentes, dans lequel la partie de support d'arbre définit un trou afin de recevoir la partie de l'arbre éloignée de la partie d'entraînement, le trou présentant un diamètre plus petit que le diamètre du tambour de câble de lève-vitre.

12. Procédé de réalisation d'un ensemble (10) de panneau intérieur de porte comprenant un panneau intérieur (12) de porte formé dans un matériau en feuille et des moyens d'entraînement de lève-vitre comprenant les étapes consistant à prévoir des moyens d'entraînement de lève-vitre possédant une partie d'entraînement et un arbre de sortie (32) qui fait saillie à partir de la partie d'entraînement, à prévoir un panneau intérieur possédant une partie de butée pour une coopération avec la partie d'entraînement et une partie de support d'arbre pour coopérer avec une partie de l'arbre éloignée de la partie d'entraînement afin de supporter l'arbre, à prévoir un tambour (44) de câble de lève-vitre à positionner les moyens d'entraînement de lève-vitre par rapport au panneau intérieur de porte par l'intermédiaire d'au moins un moyen de positionnement (36) du panneau, et à fixer les moyens d'entraînement de lève-vitre par rapport au panneau intérieur de porte, dans lequel procédé la partie de butée et la partie de support d'arbre sont formées monobloc dans un même matériau en feuille dans lequel le tambour de lève-vitre est fixé sur l'arbre et positionné entre la partie d'entraînement et la partie de support d'arbre.

13. Procédé selon la revendication 12, comprenant l'étape consistant à prévoir un outil de finition et à positionner l'outil de finition hors dudit au moins un moyen de positionnement ou de la partie de support d'arbre et à prévoir une opération de finition sur l'autre parmi ledit au moins un moyen de positionnement ou la partie de support d'arbre.

14. Procédé selon la revendication 12, comprenant l'étape consistant à prévoir un outil de finition qui réalise une opération de finition sur la partie de support d'arbre et sur ledit au moins un moyen de positionnement

15. Procédé selon l'une quelconque des revendications 12 à 14, dans lequel ledit au moins un moyen de positionnement agit également comme moyen de fixation afin de fixer le panneau intérieur de porte aux moyens d'entraînement de lève-vitre.
